# EUROPÄISCHE PATENTANMELDUNG

(11) **EP 3 871 836 A1**
(43) Veröffentlichungstag der Anmeldung: **01.09.2021**
(21) Anmeldenummer: 21158023.8
(22) Anmeldetag: 19.02.2021
(51) Int. Cl.: B24D 3/00, B24D 3/28, B24D 11/00, B24D 11/02, B32B 5/02, B32B 5/06, B32B 5/26, D04H 1/488

(54) **HALBZEUG FÜR EIN SCHLEIFMITTEL, SCHLEIFMITTEL UND VERFAHREN ZUR HERSTELLUNG DERSELBEN**

(30) Priorität: 26.02.2020 DE 102020104993
(71) Anmelder: AWUKO ABRASIVES Wandmacher GmbH & Co. KG, 34346 Hann. Münden (DE)
(72) Erfinder: Weier, Waldfried, 32584 Löhne (DE); Pinne-Wandmacher, Nicole, 34346 Hann. Münden (DE); Hinder, Axel, 33178 Borchen (DE)
(74) Vertreter: REHBERG HÜPPE + PARTNER

(57) **Zusammenfassung**

Zur Herstellung eines Halbzeugs für ein Schleifmittel (10) wird ein Trägers unter Vernadeln eines Faserflors zu einem Nadelvlies ausgebildet. Dabei wird der Faserflor mit einem Drehergewebe vernadelt, indem Nadeln durch das Drehergwebe hindurch in den Faserflor gestoßen werden. Der Träger wird mit einer Dispersion eines nicht ausgehärteten Bindemittels imprägniert. Dann wir der imprägnierte Träger getrocknet, und das Bindemittel wird teilweise ausgehärtet. Zur Herstellung eines Schleifmittels (10) unter Verwendung des so erhaltenen Halbzeugs werden weiteres nicht ausgehärtetes Bindemittel und Schleifkörner auf das Halbzeug aufgebracht, und das Bindemittel und das weitere Bindemittel werden zum Fixieren der Schleifkörner an dem Träger des Halbzeugs ausgehärtet.

## Beschreibung

### TECHNISCHES GEBIET DER ERFINDUNG

Die Erfindung bezieht sich auf ein Verfahren zur Herstellung eines Halbzeugs für ein Schleifmittel, das die Schritte des Oberbegriffs des unabhängigen Patentanspruchs 1 aufweist. Weiterhin bezieht sich die Erfindung auf ein Verfahren zur Herstellung eines Schleifmittels, das ein solches Verfahren zur Herstellung eines Halbzeugs umfasst.

Darüber hinaus betrifft die Erfindung ein Halbzeug für ein Schleifmittel mit dem Merkmalen des Oberbegriffs des unabhängigen Patentanspruchs 7 und ein auf Basis eines solchen Halbzeugs herstellbares Schleifmittel mit den Merkmalen des Oberbegriffs des unabhängigen Patentanspruchs 10.

Unter einem Schleifmittel werden hier insbesondere Schleifscheiben und Schleifbänder verstanden.

### STAND DER TECHNIK

Ein aus der EP 2 595 780 B1 bekanntes elastisch verformbares Verbundmaterial für ein Schleifmittel besteht aus einem flächigen Träger, der mit einem Prepolymermaterial beschichtet oder imprägniert ist, das beim Nachhärten unter Wärmeeinwirkung duroplastische Eigenschaften erhält. Der Träger weist mindestens eine Schicht aus gelegten Fasern auf. Das Prepolymermaterial ist in Form eines Harzes, einer Dispersion oder einer Suspension auf den Träger aufgebracht und derart getrocknet, dass es seinen ausgehärteten Zustand noch nicht erreicht hat. Die Fasern des Trägers können die Form eines einschichtigen oder mehrschichtigen Vlieses oder eines einschichtigen oder mehrschichtigen Fadengeleges oder einer Kombination aus mindestens einem Vlies und einem Fadengelege aufweisen. In dem Gelege sind die Fasern nicht durch Gewebeverbünde oder Maschen oder dergleichen untereinander verbunden. Sie können aber durch chemische oder physikalische Verfahren untereinander verbunden sein, beispielsweise durch thermisches Verschweißen oder mechanisches Vernadeln. Die Fasern können Polymer- oder Polyamidfasern sein. Das Prepolymermaterial kann aus einer wässrigen Phase aufgebracht sein. Das Prepolymermaterial kann ein zu einem Duroplasten aushärtendes Acrylmaterial, das mit einem thermoplastischen Acrylmaterial gemischt sein kann, und/oder ein zu einem Phenoplasten aushärtendes Harz, insbesondere ein Phenol-Formaldehyd-Kondensationsharz sein. Bei einem Verfahren zum Herstellen des Verbundmaterials wird der Träger in einer Lösung, Suspension oder Dispersion getränkt, die das Prepolymermaterial enthält. Dann wird der getränkte Träger getrocknet, und er kann zusätzlich kalandriert werden. Die Lösung, Suspension oder Dispersion des Prepolymermaterials kann einen Stoffanteil von 35 bis 50 Gew.-% aufweisen.

Auch wenn zu dem bekannten Verbundmaterial in der EP 2 595 780 B1 angegeben wird, dass auf seiner Basis hergestellte Schleifscheiben verschiedenen Scheibendurchmessers bis zu den in der DIN EN 13743 festgelegten maximal zulässigen Drehzahlen standfest sind, kann dies bei dem bekannten Verbundmaterial in der Praxis nicht sichergestellt werden. Zudem weist das bekannte Verbundmaterial eine vergleichsweise hohe Reißdehnung sowohl in Längs- als auch in Querrichtung auf.

Aus der DD 264 466 A1 ist ein Glasseiden-Fadenlagen-Nähgewirk zur Herstellung von kunstharzimprägnierten Verstärkungseinlagen für Trenn- und Schruppschleifkörper bekannt. Zum Stand der Technik ist in der DD 264 466 A1 ausgeführt, dass die Nähgewirke zur Herstellung von schleifmittelbeschichteten Flächengebilden, deren Kettfäden aus Polyester-, Polyamid-, Polyvinylalkohol- oder Glasseidefasern bestehen und deren Schussfäden aus Polyester- oder Polyamidgarnen bestehen, den Nachteil aufweisen, dass daraus gefertigte kunstharzimprägnierte Verstärkungseinlagen zur Herstellung fester Schleifkörper, insbesondere von Trenn- und Schruppschleifkörpern, nicht geeignet sind, weil das körnige Gemisch aus Schleif- und Bindemitteln sowie Füllstoffen diese nur ungenügend durchdringen kann. Diesen Nachteil soll Glasseiden-Drehergewebe, welches mindestens in der Kette aus Glasseidentwist oder-zwirn besteht, bei der Verwendung als Verstärkungseinlage für feste Schleifkörper nicht aufweisen. Aus der EP 0 001 286 A1 ist ein Verfahren zum Imprägnieren von Armierungsfasern, Armierungswegeben, Vliesen und dergleichen in Schleifscheiben bekannt. Die Fasern werden mit einem Harz ummantelt, wobei zuerst 5 bis 50 % der gewünschten Endmenge des Harzes in der Form eines dünnflüssigen Harzes auf die Fasern aufgetragen werden und anschließend 50 bis 95% des Harzes in Pulverform. Daraufhin wird der Harzanteil durch Erwärmung verschmolzen. Dadurch wird erreicht, dass große Lösungsmittelmengen, deren Entfernung Probleme aufwirft, nicht anfallen. Weiterhin ist in der EP 0 001 286 A1 ausgeführt, dass zur Armierung von Schleifscheiben vorteilhaft weitmaschige Gewebe in symmetrischer Webart, zum Beispiel Leinwandbindung oder Panamabindung, verwendet werden, da andere Gewebearten, zum Beispiel Drehergewebe, leicht zum Verzug, insbesondere dünner Schleifkörper, führen.

Aus der US 3 861 892 A sind ein Verfahren zur Herstellung eines Halbzeugs für ein Schleifmittel und ein Schleifmittel bekannt, bei denen die Fäden eines offenen Drehergewebes mit einem Bindemittel imprägniert und dann mit Schleifkörnern bestreut werden. Anschließend wird das Bindemittel zum Fixieren der Schleifkörner auf den Fäden des Drehergewebes ausgehärtet.

Aus der DE 2 162 037 A sind ein Verbundmaterial für die Verarbeitung in flächige Schleifmittel mit den Merkmalen des Oberbegriffs des unabhängigen Patentanspruchs 4 und ein Verfahren zu dessen Herstellung mit den Merkmalen des Oberbegriffs des unabhängigen Patentanspruchs 1 bekannt. Dabei weist das flächige Verbundmaterial ein endloses Band aus einem flauschigen, offenen, wenig dichten und faserigen Material und ein stabiles mullartiges Gewebe aus zugfesten organischen Kunststofffäden auf. Das faserige Material ist durch Nadelheftung mit der gewebten Unterlage verbunden. Das Verbundmaterial ist mit einem organischen Harz getränkt, welches Schleifpartikel fest mit den Fasern verbindet.

### AUFGABE DER ERFINDUNG

Der Erfindung liegt die Aufgabe zugrunde, ein Verfahren zur Herstellung eines Halbzeugs für ein Schleifmittel mit den Merkmalen des Oberbegriffs des unabhängigen Patentanspruchs 1 und ein entsprechendes Halbzeug nach dem Oberbegriff des unabhängigen Patentanspruchs 7 aufzuzeigen, die zu hochstandfesten Schleifmitteln, insbesondere einem hochstandfesten Schleifmittel mit den Merkmalen des Oberbegriffs des unabhängigen Patentanspruchs 10 führen.

### LÖSUNG

Erfindungsgemäß wird die Aufgabe durch ein Verfahren zur Herstellung eines Halbzeugs für ein Schleifmittel mit den Schritten des unabhängigen Patentanspruchs 1, durch ein Halbzeug mit den Merkmalen des unabhängigen Patentanspruchs 4 und durch ein Schleifmittel mit den Merkmalen des unabhängigen Patentanspruchs 11 gelöst. Die abhängigen Patentansprüche betreffen bevorzugte Ausführungsformen des erfindungsgemäßen Verfahrens, des erfindungsgemäßen Halbzeugs und des erfindungsgemäßen Schleifmittels. Dabei ist der Patentanspruch 6 auf ein Verfahren zur Herstellung eines Schleifmittels gerichtet, der das erfindungsgemäße Verfahren zur Herstellung eines Halbzeugs umfasst.

### BESCHREIBUNG DER ERFINDUNG

Bei einem erfindungsgemäßen Verfahren zur Herstellung eines Halbzeugs für ein Schleifmittel mit den Schritten (i) Ausbilden eines Trägers unter Vernadeln eines Faserflors zu einem Nadelvlies, (ii) Imprägnieren des Trägers mit einer Dispersion eines nicht ausgehärteten Bindemittels und (iii) Trocknen des imprägnierten Trägers und teilweises Aushärten des Bindemittels wird der Faserflor zum Ausbilden des Trägers mit einem Drehergewebe vernadelt, wobei Nadeln durch das Drehergewebe hindurch in den Faserflor gestoßen werden.

Ein Drehergewebe, wie es bei dem erfindungsgemäßen Verfahren zur Ausbildung des Trägers für das Halbzeug verwendet wird, wird auch als Gedrebe bezeichnet.

Durch das Vernadeln des Faserflors mit dem Drehergewebe wird gleichzeitig aus dem Faserflor das Nadelvlies ausgebildet und das Nadelvlies mechanisch mit dem Drehergewebe verbunden. Dazu werden die Nadeln für das Vernadeln des Faserflors durch das Drehergewebe hindurch in den Faserflor gestoßen, so dass beim Zurückziehen der Nadeln von den Nadeln erfasste Fasern des Faserflors in das Drehergewebe hinein und durch dieses hindurch gezogen werden. Diese auch Nadelfasern genannten Fasern bewirken die mechanische Verbindung des Faserflors beziehungsweise des daraus ausgebildeten Nadelvlieses mit dem Drehergewebe.

Das Drehergewebe stabilisiert das Nadelvlies in der Haupterstreckungsebene des Trägers. Bei einem Drehergewebe umschlingen Kettfäden einer ersten Gruppe von Kettfäden, die auch als Bindeketten bezeichnet werden, quer zu den Kettfäden verlaufende Schussfäden und Kettfäden einer zweiten Gruppe von Kettfäden, die auch als Trägerketten bezeichnet werden. Dabei kann die Umschlingung der Schussfäden und/oder der Trägerketten durch die Bindeketten jeweils über einen Teil des Umfangs der Schussfäden und der Trägerketten gegeben sein oder über den gesamten Umfang. Im ersten Fall handelt es sich um ein Halbdrehergewebe, im zweiten Fall über ein Volldrehergewebe. Durch den geraden Verlauf der Schussfäden und der Trägerketten durch das Drehergewebe weist ein Drehergewebe eine hohe Steifigkeit und daher eine kleine Reißdehnung in Längs- und Querrichtung auf. Durch die Umschlingung der Schussfäden und der Trägerketten mit den Bindeketten wird zugleich eine Fixierung der Schussfäden an den Bindeketten und der Bindeketten an den Schussfäden in Längs- und Querrichtung und damit eine gute Formstabilität des Drehergewebes erreicht. Diese Fixierung wird zudem durch das Imprägnieren des Trägers mit der Dispersion des nicht ausgehärteten Bindemittels und das anschließende Trocknen des Trägers und teilweise Aushärten des Bindemittels gesteigert, indem das Bindemittel sowohl an die Schussfäden als auch die Kettfäden anbindet. Das Bindemittel fixiert zudem die mechanische Verbindung des Nadelvlieses mit dem Drehergewebe durch die Nadelfasern, indem es an die Nadelfasern und das Drehergewebe einerseits beziehungsweise die Nadelfasern und die restlichen Fasern des Nadelvlieses andererseits anbindet.

Bei dem erfindungsgemäßen Verfahren ist es wichtig, dass das in den Träger eingebrachte Bindemittel zunächst nur teilweise ausgehärtet wird, damit seine vollständige Aushärtung bei der Herstellung des eigentlichen Schleifmittels erfolgen kann. Nur dann kann das schon in dem Halbzeug vorhandene Bindemittel als Mittler für eine chemische Ankopplung eines weiteren Bindemittels an den Träger dienen, mit dem Schleifkörner des Schleifmittels an den Träger angebunden werden. Dazu ist anzumerken, dass Aushärten, sowie dieser Begriff hier verwendet wird, nicht immer und auch nicht regelmäßig bedeutet, dass das Bindemittel im Falle seines vollständigen Aushärtens hart wird. Vielmehr ist mit dem Aushärten das Vernetzen des Bindemittels gemeint, das zwar mit einer Ausbildung einer gewissen Steifigkeit des Bindemittels einhergeht. Diese Steifigkeit kann aber vergleichsweise klein sein und auch dem fertigen Schleifmittel eine hohe Flexibilität belassen.

Durch das erfindungsgemäße Verfahren wird insgesamt ein Halbzeug ausgebildet, das gegenüber mechanischen Beanspruchungen eine hohe Standfestigkeit aufweist. Insbesondere werden von Schleifscheiben, die auf Basis eines erfindungsgemäß hergestellten Halbzeugs ausgebildet werden, die geforderten Sollsprengdrehzahlen leicht erreicht und überschritten. Wegen seiner kleinen Reißdehnung bzw. hohen Zugsteifigkeit vor allem in Längsrichtung ist das erfindungsgemäß hergestellte Halbzeug aber auch gut zur Ausbildung von Schleifbändern geeignet.

Bei dem erfindungsgemäßen Verfahren wird der Faserflor vor dem Vernadeln auf beiden Seiten des Drehergewebes angeordnet. Dann werden beim Vernadeln beide Faserflore durch die Nadelfasern mit dem dazwischen liegenden Drehergewebe verbunden.

Das bei dem erfindungsgemäßen Verfahren eingesetzte Bindemittel kann ein solches auf Acrylat- und/oder Phenol- und/oder Harnstoff-Melamin-Basis sein. Beim Imprägnieren des Trägers können auch mehrere Bindemittel parallel innerhalb derselben oder nacheinander in verschiedenen Dispersionen eingesetzt werden. Die Zusammensetzung des Bindemittels bestimmt einerseits die Bindung der Fasern des Trägers durch das Bindemittel untereinander und an die Schleifkörner bei dem fertigen Schleifmittel und andererseits die Verformbarkeit des fertigen Schleifmittels. Es versteht sich, dass die Zusammensetzung des Bindemittels und des weiteren Bindemittels, mit dem die Schleifkörner an den Träger angebunden werden, aufeinander abzustimmen sind, um eine gute chemische Anbindung des weiteren Bindemittels an das Bindemittel und damit an die Fasern des Trägers zu erreichen. Bei dem teilweisen Aushärten des Bindemittels können die erreichten Aushärtungsgrade unterschiedlicher Anteile des Bindemittels unterschiedlich sein. Entscheidend ist, dass mindestens ein Anteil des Bindemittels nur teilweise ausgehärtet ist, so dass er sich beim vollständigen Aushärten noch chemisch mit dem weiteren Bindemittel verbinden kann, das zum Anbinden von Schleifkörnern an den Träger zum Einsatz kommt.

Bei der Dispersion des nicht ausgehärteten Bindemittels, mit der der Träger imprägniert wird, kann es sich insbesondere um eine wässrige Dispersion handeln, das heißt eine Dispersion des Bindemittels in einer Flüssigkeit, die zumindest im Wesentlichen aus Wasser besteht. Auf die Verwendung größerer Mengen an Lösungsmittel ist das erfindungsgemäße Verfahren nicht angewiesen.

Im Rahmen des erfindungsgemäßen Verfahrens kann das mit dem Drehergewebe vernadelte Nadelvlies vor und alternativ oder zusätzlich nach dem Imprägnieren heiß kalandriert werden. Durch das Kalandrieren kann der Träger auf einheitliche Dicke gebracht und dabei verdichtet werden. Durch die Wärmeeinwirkung beim Kalandrieren wird die eingestellte Dicke beziehungsweise die dabei erreichte Verdichtung fixiert. Dies gilt insbesondere dann, wenn derart heiß kalandriert wird, dass in dem Träger enthaltene Schmelzfasern aktiviert werden, indem sie zumindest soweit erwärmt werden, dass sie leichter plastisch verformbar sind, oder sogar soweit, dass sie aneinander oder an andere Fasern anschmelzen. Außerdem kann durch den Wärmeeintrag beim heißen Kalandrieren auch das Trocknen des imprägnierten Trägers sowie das teilweise Aushärten des Bindemittels in dem Träger initiiert oder beschleunigt werden.

Bei einem erfindungsgemäßen Verfahren zur Herstellung eines Schleifmittels wird ein Halbzeug gemäß dem erfindungsgemäßen Verfahren zur Herstellung des Halbzeugs hergestellt. Dann werden weiteres nicht ausgehärtetes Bindemittel und Schleifkörner auf das Halbzeug aufgebracht. Erst danach werden das Bindemittel und das weitere Bindemittel zum Fixieren der Schleifkörner an dem Träger des Halbzeugs gemeinsam ausgehärtet. Das Aufbringen des weiteren nicht ausgehärteten Bindemittels und der Schleifkörner kann in grundsätzlich bekannter Weise auch schrittweise so erfolgen, dass zunächst eine erste Partie des weiteren nicht ausgehärteten Bindemittels auf das Halbzeug aufgetragen wird, dass dann die Schleifkörner derart unter Einwirkung eines elektrischen Feldes aufgebracht werden, dass sie sich mit ihrer breiteren Basis in der ersten Partie des weiteren nicht ausgehärteten Bindemittels verankern, und dass dann eine zweite Partie des weiteren nicht ausgehärteten Bindemittels aufgebracht wird, um die Schleifkörner, möglichst bis auf ihre von dem Träger abstehenden Spitzen und Kanten, in dem weiteren Bindemittel einzubetten. Hieran anschließend erfolgt dann das gemeinsame Aushärten des Bindemittels und des weiteren Bindemittels zum Fixieren der Schleifkörner an dem Träger des Halbzeugs.

Ein erfindungsgemäßes Halbzeug für ein Schleifmittel mit einem Träger, der ein mit einem Gewebe vernadeltes Nadelvlies aufweist und an den teilweise ausgehärtes Bindemittel angebunden ist, ist dadurch gekennzeichnet, dass das Gewebe ein Drehergewebe ist und dass das Nadelvlies in dem Träger auf beiden Hauptseiten des Drehergewebes angeordnet ist.

Bei dem erfindungsgemäßen Halbzeug können 40 bis 55 % oder genauer 45 bis 50 %, das heißt etwa bis zur Hälfte seines Gewichts, auf das teilweise ausgehärtete Bindemittel entfallen. Insbesondere das Nadelvlies des Trägers des erfindungsgemäßen Halbzeugs weist ein ausreichend großes freies Volumen auf, um ausreichende Mengen an Dispersion des Bindemittels aufzunehmen, um so hohe Gewichtsanteile des Bindemittels an dem Halbzeug zu erreichen. Die hohen Gewichtsanteile des Bindemittels an dem Halbzeug sorgen einerseits für eine Stabilisierung des Trägers bereits mit dem nur teilweise ausgehärteten Bindemittel und andererseits für eine belastbare chemische Anbindung des weiteren Bindemittels, in das die Schleifkörner bei dem fertigen Schleifmittel eingebettet sind, an den Träger. Es versteht sich, dass zum Erreichen eines hohen Gewichtsanteils des Bindemittels an dem Halbzeug das Bindemittel in einer ausreichend hoch konzentrierten Dispersion in den Träger eingebracht werden muss. Dies hat zugleich den Vorteil, dass beim Trocknen des mit der Dispersion imprägnierten Trägers keine großen Mengen Trägerflüssigkeit der Dispersion entfernt werden müssen.

Ein Flächengewicht des erfindungsgemäßen Halbzeugs kann je nach Anwendung in einem weiten Bereich von etwa 300 g/qm bis etwa 2.000 g/qm liegen. Vielfach wird das Flächengewicht zwischen 500 g/qm und 1.500 g/qm betragen. Viele Schleifmittel lassen sich unter Verwendung von Halbzeugen mit typischen Flächengewichten von 600 g/qm bis 1.200 g/qm ausbilden. So kann das erfindungsgemäße Halbzeug beispielsweise mit drei unterschiedlichen Flächengewichten von 600 g/qm, 900 g/qm und 1.200 g/qm hergestellt und angeboten werden.

Auch ein erfindungsgemäßes Schleifmittel mit einem Träger, der ein Nadelvlies aufweist und an den Schleifkörner mit Bindemittel angebunden sind, ist erfindungsgemäß dadurch gekennzeichnet, dass das Nadelvlies in dem Träger mit einem Drehergewebe vernadelt ist.

Die im Folgenden erläuterten Detailausgestaltungsmöglichkeiten betreffen ebenfalls sowohl das erfindungsgemäße Halbzeug als auch das erfindungsgemäße Schleifmittel.

Das Nadelvlies kann angeschmolzene Schmelzfasern aufweisen, die das Nadelvlies und auch die mechanische Verbindung des Nadelvlieses mit dem Drehergewebe durch die Nadelfasern stabilisieren.

Das Nadelvlies und das Drehergewebe können unabhängig voneinander Polyester- und/oder Polyamidfasern aufweisen. Die Auswahl der Fasern für das Nadelvlies und das Drehergewebe richten sich nach den technologischen Anforderungen an das Schleifmittel, wobei die unterschiedlichen Kosten die Bereitstellung der verschiedenen Fasern zu berücksichtigen sind. Das Nadelvlies und das Drehergewebe können teilweise oder ganz auch aus anderen Kunststofffasern als Polyester- und Polyamidfasern und/oder aus natürlichen Fasern ausgebildet sein. Dabei versteht es sich, dass dann, wenn das Nadelvlies Schmelzfasern umfassen soll, zumindest ein Teil der Fasern des Nadelvlieses, nämlich zumindest die Schmelzfasern, aus Kunstharz ausgebildet sein werden.

Praktisch erweist sich ein Anteil von 10 bis 20 Gewichtsprozent Schmelzfasern mit einer Schmelztemperatur von 160° bis 200° als vorteilhaft. Dabei können diese Schmelzfasern sogenannte Bico-Fasern, d. h. Zweikomponentenfasern, mit einer Polyesterkomponente und einer thermoplastischen Komponente sein. Die restlichen Fasern des Nadelvlieses können ebenso wie die Fasern der Fäden des Drehergewebes Polyesterfasern sein.

Wie bereits eingangs im Zusammenhang mit dem erfindungsgemäßen Verfahren angesprochen wurde, kann das Drehergewebe, welches bei dem erfindungsgemäßen Halbzeug beziehungsweise dem erfindungsgemäßen Schleifmittel verwendet wird, ein Halbdrehergewebe oder auch ein Volldrehergewebe sein.

Ein Flächengewicht des Drehergewebes liegt bei der vorliegenden Erfindung typischerweise zwischen 30g/qm und 150g/qm und häufig auch zwischen 50g/qm und 100 g/qm. Es handelt sich damit in der Regel um ein offenes aber nicht sehr offenes Gewebe mit einer typischen Flächenbelegung, das heißt einem von den Fäden des Drehergewebes bedeckten Flächenanteil, zwischen 20 % und 90 % oder genauer zwischen 30 % und 70 % oder um 50 %. Die Schussfäden und die Trägerketten des Drehergewebes können ungefähr gleiche Fadenstärken aufweisen, während die Bindeketten des Drehergewebes typischerweise von geringerer Fadenstärke sind, die im Bereich von 5 bis 50% oder 10 bis 30% der Fadenstärken der Schussfäden und Trägerketten liegen kann. Praktisch können die Schussfäden und die Trägerketten eine Feinheit von etwa 1000 dtex oder etwas darüber aufweisen. Weiterhin kann das Drehergewebe 20 bis 40 Schussfäden und 20 bis 40 Trägerketten je Dezimeter aufweisen, wobei wegen der zusätzlichen Bindeketten ein oder zwei Trägerketten je Dezimeter weniger vorhanden sein können als Schussfäden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Bindemittel die Rede ist, ist dies so zu verstehen, dass genau ein Bindemittel, zwei Bindemittel oder mehr Bindemittel vorhanden sind. Die in den Patentansprüchen angeführten Merkmale können durch andere Merkmale ergänzt werden oder die einzigen Merkmale sein, die das jeweilige Verfahren oder das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Flussdiagramm des erfindungsgemäßen Verfahrens zum Herstellen eines erfindungsgemäßen Schleifmittels, das das erfindungsgemäße Verfahren zur Herstellung eines erfindungsgemäßen Halbzeugs für das Schleifmittel umfasst.
- **Fig. 2**: zeigt schematisch ein Drehergewebe zur Verwendung bei dem Verfahren gemäß Fig. 1.
- **Fig. 3**: illustriert das Vernadeln eines Faserflors mit dem Drehergewebe gemäß Fig. 2 zur Herstellung eines Trägers für ein Halbzeug, das als solches nicht unter die Patentansprüche fällt.
- **Fig. 4**: ist ein schematischer Schnitt durch den gemäß Fig. 3 hergestellten Träger.
- **Fig. 5**: ist ein schematischer Schnitt durch das Halbzeug, das als solches nicht unter die Patentansprüche fällt, und
- **Fig. 6**: ist ein schematischer Schnitt durch ein Schleifmittel, das als solches nicht unter die Patentansprüche fällt.

### FIGURENBESCHREIBUNG

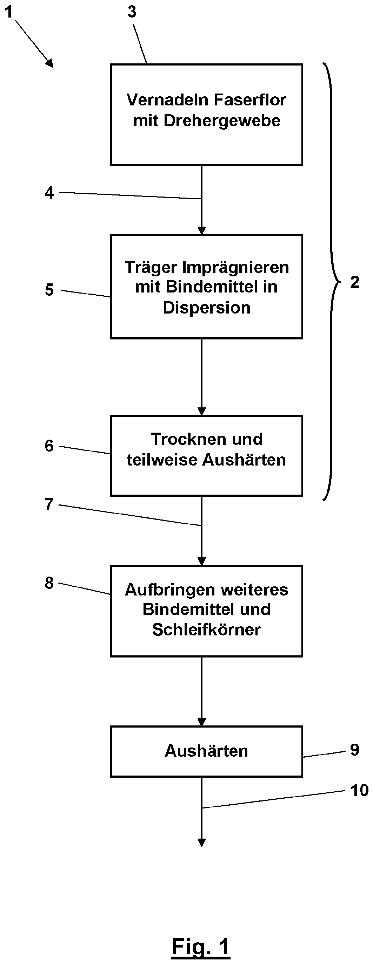

Das in **Fig. 1** illustrierte Verfahren 1 zur Herstellung eines erfindungsgemäßen Schleifmittels umfasst ein erfindungsgemäßes Verfahren 2 zur Herstellung eines erfindungsgemäßen Halbzeugs. In einem ersten Schritt 3 beider erfindungsgemäßen Verfahren wird ein Faserflor mit einem Drehergewebe vernadelt. Auf diese Weise wird ein flächiger Träger 4 hergestellt. In einem nachfolgenden Schritt 5 wird der Träger 4 mit Bindemittel in einer wässrigen Dispersion imprägniert. Aus einem anschließenden Trocknen des imprägnierten Trägers und teilweise Aushärten des Bindemittels in einem Schritt 6 resultiert das erfindungsgemäße Halbzeug 7. Auf dieses Halbzeug 7 werden in einem Schritt 8 weiteres Bindemittel und Schleifkörner aufgebracht. Dabei kann das weitere Bindemittel in zwei Partien vor und nach den Schleifkörnern aufgebracht werden, und die Schleifkörner können unter Einwirkung eines elektrischen Felds so aufgebracht werden, dass sie mit ihren Spitzen von dem Halbzeug 7 abstehen. Anschließendes Aushärten des Bindemittels und des weiteren Bindemittels in einem Schritt 9 führt zu dem erfindungsgemäßen Schleifmittel 10. Dieses Schleifmittel 10 kann beispielsweise zu Schleifscheiben oder Schleifbändern konfektioniert werden.

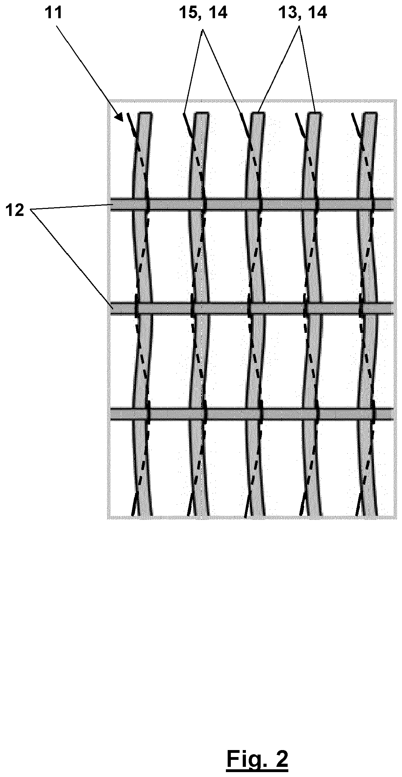

**Fig. 2** zeigt schematisch ein Drehergewebe 11. Das Drehergewebe 11 umfasst im Wesentlichen geradlinige Schussfäden 12, die quer zu im Wesentlichen geradlinigen Trägerketten 13 als erste Gruppe von Kettfäden 14 verlaufen. Zusätzliche Kettfäden 14 geringerer Fadenstärke dienen als Bindeketten 15 und umschlingen die Schussfäden 12 in der Darstellung gemäß Fig. 2 wechselweise links und rechts der Trägerketten 13. Dabei kann die Umschlingung halb oder vollständig sein, wodurch Halb- oder Volldrehergewebe resultiert. Das Drehergewebe 11 ist durch den geradlinigen Verlauf der Schussfäden 12 und der Trägerketten 13 in Längs- und Querrichtung steif. Auch bei geringer Flächenbelegung, wie sie in Fig. 2 dargestellt ist, sind die Schussfäden 12 dennoch an den Trägerketten 13 in Längsrichtung der Kettfäden 14 fixiert, weil sie von den Bindeketten 15 umschlungen sind. Diese Fixierung wird bei dem erfindungsgemäßen Verfahren noch durch das Bindemittel gesteigert, das in Schritt 5 gemäß Fig. 1 in den das Drehergewebe 11 umfassenden Träger 4 eingebracht und später in den Schritten 6 und 9 in dem Träger 4 ausgehärtet wird.

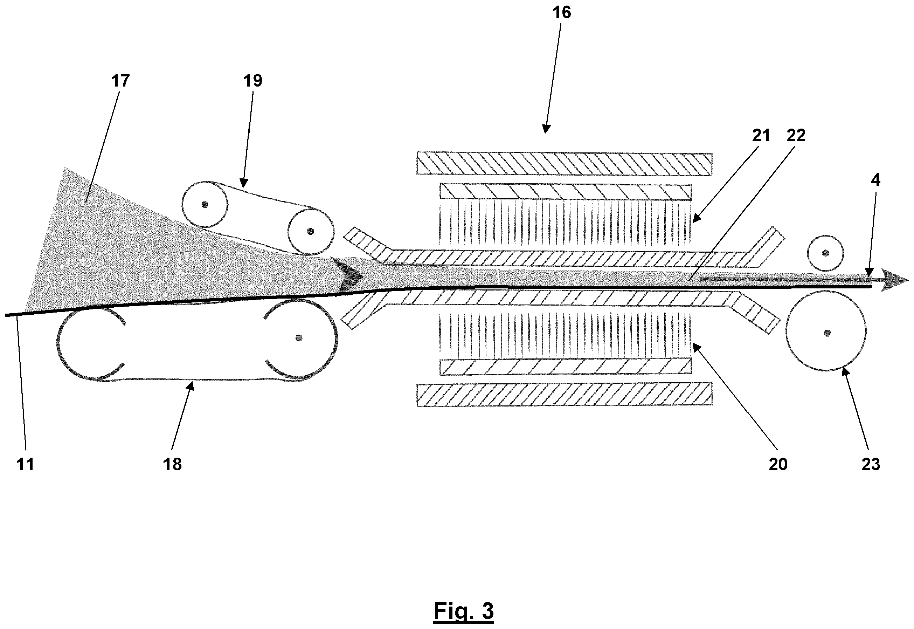

**Fig. 3** zeigt, wie vor einem Nadelstuhl 16 das Drehergewebe 11 mit dem Faserflor 17 durch sich aneinander annähernde Förderbänder 18 und 19 zusammengeführt wird und dann in dem Nadelstuhl 16 das Vernadeln mit Nadeln 20 und 21 erfolgt, die hier von oben und unten durch den Faserflor 17 gestochen und zurückgezogen werden. Beim Zurückziehen ziehen zumindest die von unten durch das Drehergewebe hindurch in den Faserflor 17 gestoßenen Nadeln 20 Fasern aus dem Faserflor 17 auch durch das Drehergewebe 11. Diese so genannten Nadelfasern verbinden mechanisch ein aus dem Faserflor 17 durch das Vernadeln entstehendes Nadelvlies 22 mit dem Drehergewebe 11. Innerhalb des Nadelvlieses 22 verbinden die Nadelfasern die weiteren Fasern des Faserflors 17 miteinander. Durch ein anschließendes heißes Kalandrieren mit einem Kalander 23 wird die Dicke des Trägers 4 definiert und bei Verwendung von Schmelzfasern in dem Faservlies 17 und/oder in dem Drehergewebe 11 zusätzlich eine mechanische Stabilisierung des Trägers 4 durch Anschmelzen der Schmelzfasern erreicht.

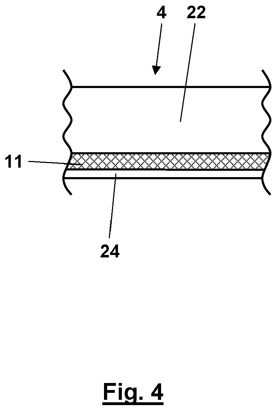

Der schematische Schnitt durch den Träger 4 gemäß **Fig. 4** zeigt den Bereich des Nadelvlieses 22 über dem Drehergewebe 11 und unterhalb des Drehergewebes 11 einen weiteren Faserflor 24 aus Nadelfasern.

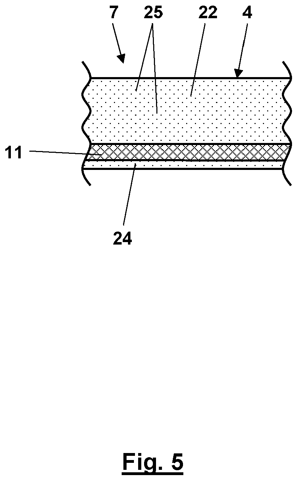

Der schematische Schnitt durch das Halbzeug 7gemäß **Fig. 5** zeigt zusätzlich das in den Träger eingebettete Bindemittel 25, das wie dargestellt in Form einzelner Partikel aber auch in Form zusammenhängender Beschichtungen der Fasern vorliegen kann.

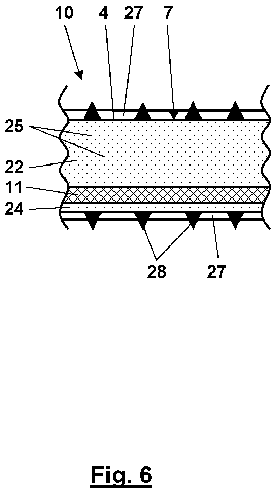

Der Schnitt durch das fertige Schleifmittel 10 gemäß **Fig. 6** zeigt das auf das Halbzeug 7 aufgebrachtes weiteres Bindemittel 27 mit eingebetteten Schleifkörnern 28 auf beiden Seiten des Halbzeugs 7. Die Schleifkörner 28 stehen mit ihren Spitzen und Kanten aus dem weiteren Bindemittel 27 von dem Träger 4 weg vor. An dem Träger 4 ist das weitere Bindemittel 27 durch Vermittlung des Bindemittels 25 angebunden, das in dem Schritt 9 gemeinsam mit dem weiteren Bindemittel 27 ausgehärtet wurde.

Bei einem erfindungsgemäß hergestellten Halbzeug mit einem Flächengewicht von circa 800 g/qm, wovon 70 g/qm auf das Drehergewebe mit je Dezimeter 31 Schussfäden und 30 Trägerketten von 1.100 dtex und etwas unter 50 % auf das Bindemittel entfielen, ergab sich eine Reißkraft in Längsrichtung von etwa 2.000 N/5 cm und eine Reißkraft in Querrichtung von circa 1.200 N/5 cm. Dabei war die Reißdehnung mit kleiner als 20 % in beiden Richtungen gleich und vergleichsweise klein. Damit ist das erfindungsgemäße Halbzeug sowohl zur Ausbildung von Schleifscheiben als auch von Schleifbändern geeignet.

### BEZUGSZEICHENLISTE

- 1: Verfahren zur Herstellung eines Schleifmittels
- 2: Verfahren zur Herstellung eines Halbzeugs
- 3: Schritt Vernadeln
- 4: Träger
- 5: Schritt Imprägnieren
- 6: Schritt Trocknen und teilweise Aushärten
- 7: Halbzeug
- 8: Schritt Aufbringen
- 9: Schritt Aushärten
- 10: Schleifmittel
- 11: Drehergewebe
- 12: Schussfaden
- 13: Trägerkette
- 14: Kettfaden
- 15: Bindekette
- 16: Nadelstuhl
- 17: Faserflor
- 18: Förderband
- 19: Förderband
- 20: Nadeln
- 21: Nadeln
- 22: Nadelvlies
- 23: Kalander
- 24: weiterer Faserflor
- 25: Bindemittel
- 27: weiteres Bindemittel
- 28: Schleifkorn

## Patentansprüche

1. Verfahren zur Herstellung eines Halbzeugs (2) für ein Schleifmittel (10) mit den Schritten:
- Ausbilden eines Trägers (4) durch Vernadeln (3) eines Faserflors (17) mit einem Gewebe, wobei Nadeln (20) durch das Drehergwebe (11) hindurch in den Faserflor (17) gestoßen werden und wobei der Faserflor (17) zu einem Nadelvlies (22) vernadelt wird,
- Imprägnieren des Trägers (4) mit einer Dispersion eines nicht ausgehärteten Bindemittels (25) und
- Trocknen des imprägnierten Trägers (4) und teilweises Aushärten des Bindemittels (25), **dadurch gekennzeichnet,**
- **dass** der Faserflor (17) zum Ausbilden des Trägers (4) mit einem Drehergewebe (11) vernadelt wird und
- **dass** der Faserflor (17) vor dem Vernadeln (3) auf beiden Hauptseiten des Drehergewebes (11) angeordnet wird.

2. Verfahren nach Anspruch 1, **dadurch gekennzeichnet, dass** das mit dem Drehergewebe (11) vernadelte Nadelvlies (22) vor und/oder nach dem Imprägnieren (5) heiß kalandriert wird.

3. Verfahren zur Herstellung eines Schleifmittels (10),
- wobei ein Halbzeug (7) gemäß dem Verfahren nach einem der vorhergehenden Ansprüche hergestellt wird,
- wobei weiteres nicht ausgehärtetes Bindemittel (27) und Schleifkörner (28) auf das Halbzeug (7) aufgebracht werden und
- wobei das Bindemittel (25) und das weitere Bindemittel (27) zum Fixieren der Schleifkörner (28) an dem Träger (4) des Halbzeugs (7) ausgehärtet werden.

4. Halbzeug (7) für ein Schleifmittel (10) mit einem Träger (4), der ein mit einem Gewebe vernadeltes Nadelvlies (22) aufweist und an den teilweise ausgehärtetes Bindemittel (25) angebunden ist, **dadurch gekennzeichnet,**
- **dass** das Gewebe ein Drehergewebe ist und
- **dass** das Nadelvlies (22) in dem Träger (4) auf beiden Hauptseiten des Drehergewebes (11) angeordnet ist.

5. Halbzeug (7) nach Anspruch 4, **dadurch gekennzeichnet, dass** 40 bis 55 Gewichts-% oder 45 bis 50 Gewichts-% des Halbzeugs (7) auf das teilweise ausgehärtete Bindemittel (27) entfallen.

6. Halbzeug (7) nach Anspruch 4 oder 5, **dadurch gekennzeichnet, dass** ein Flächengewicht des Halbzeugs (7) zwischen 300 g/qm und 2.000 g/qm oder zwischen 500 g/qm und 1.500 g/qm oder zwischen 600 g/qm und 1.200 g/qm liegt.

7. Halbzeug (7) nach einem der Ansprüche 4 bis 6, **dadurch gekennzeichnet, dass** das Nadelvlies (22) angeschmolzene Schmelzfasern aufweist.

8. Halbzeug (7) nach einem der Ansprüche 4 bis 7, **dadurch gekennzeichnet, dass** das Nadelvlies (22) und das Drehergewebe (11) unabhängig voneinander Polyester- und/oder Polyamidfasern aufweisen.

9. Halbzeug (7) nach einem der Ansprüche 4 bis 8, **dadurch gekennzeichnet, dass** das Drehergewebe (11) ein Halbdrehergewebe oder ein Volldrehergewebe ist.

10. Halbzeug (7) nach einem der Ansprüche 4 bis 9, **dadurch gekennzeichnet, dass** das Drehergewebe (11) ein Flächengewicht zwischen 30 g/qm und 150 g/qm oder zwischen 50 g/qm und 100 g/qm aufweist.

11. Schleifmittel (10) mit einem Träger (4), der ein mit einem Gewebe vernadeltes Nadelvlies (22) aufweist und an den Schleifkörner (28) mit Bindemittel (25) angebunden sind, **dadurch gekennzeichnet,**
- **dass** das Gewebe ein Drehergewebe (11) ist und
- **dass** das Nadelvlies (22) auf beiden Hauptseiten des Drehergewebes (11) angeordnet ist.

12. Schleifmittel (10) nach Anspruch 11, **dadurch gekennzeichnet, dass** das Nadelvlies (22) angeschmolzene Schmelzfasern aufweist.

13. Schleifmittel (10) nach Anspruch 11 oder 12, **dadurch gekennzeichnet, dass** das Nadelvlies (22) und das Drehergewebe (11) unabhängig voneinander Polyester- und/oder Polyamidfasern aufweisen.

14. Schleifmittel (10) nach einem der Ansprüche 11 bis 13, **dadurch gekennzeichnet, dass** das Drehergewebe (11) ein Halbdrehergewebe oder ein Volldrehergewebe ist.

15. Schleifmittel (10) nach einem der Ansprüche 11 bis 14, **dadurch gekennzeichnet, dass** das Drehergewebe (11) ein Flächengewicht zwischen 30 g/qm und 150 g/qm oder zwischen 50 g/qm und 100 g/qm aufweist.
